# EUROPEAN PATENT SPECIFICATION

(11) **EP 3 401 076 B1**
(45) Date of publication and mention of the grant of the patent: **26.02.2020**
(21) Application number: 18171112.8
(22) Date of filing: 07.05.2018
(51) Int. Cl.: B29C 45/40

(54) **EJECTION UNIT FOR MOULDS**
AUSWERFEREINHEIT FÜR WERKZEUGE
UNITÉ D'ÉJECTION POUR MOULES

(30) Priority: 08.05.2017 IT 201700049428
(43) Date of publication of application: 14.11.2018
(73) Proprietor: Cromaplast S.P.A., 36078 Valdagno (VI) (IT)
(72) Inventor: SANTAGIULIANA, Paolo, 37047 S. Bonifacio (VR) (IT)
(74) Representative: Marchioro, Paolo

(56) References cited:
- CH-A5- 630 840
- CN-A- 104 108 163
- CN-B- 103 786 313
- FR-A1- 2 414 998

## Description

The invention regards a removal unit for moulds, particularly for moulding plastic material.

The invention also regards a tie-rod for such removal unit.

It is currently known that in the moulds for moulding plastic material, the mould consists of a fixed part, generally a die, and a mobile part, known as punch.

The systems required to remove the moulded piece are associated to the mobile part.

The mobile part of the mould, i.e. the punch, is fixed to a pressing plane, which has through holes for the sliding of columnar elements which move a mobile plate, known in the technical jargon as 'mould table', arranged to slide in a special interspace defined between the pressing plane and the punch of the mould, a plurality of removal elements being constrained to the table.

The removal elements slide in through holes defined on the punch of the mould between an inoperative receded configuration and an operative advanced configuration in which they push the moulded piece to detach it from the punch.

Among such columnar elements that move the removal-holder table, at least one, known in the technical jargon as 'tie-rod', is fixed - at one end - to the removal-holder table and - at the opposite end - to a second plate, also referred to as a 'pressing table', the other columnar elements being fixed to such pressing table only.

Such pressing table, subsequently to the opening of the press, advances with respect to the pressing plane due to the action of actuator means associated to the press, so that, by means of the columnar elements which carry the table with the removal elements, there occurs the advancement of the movable plate and the ensuing thrust action of the removal elements on the moulded piece.

An example of actuator means is described in the patent document FR2414998 dated 18 January 1978, which regards an ejection cylinder for pressing equipment for injecting thermoplastic, thermosetting or elastomeric material.

The tie-rod has the task of receding the removal-holder table at the end of the removal operation.

Though known and common, such removal systems reveal some improvable aspects.

As a matter of fact, a crucial factor in terms of productivity of a mould is the time for the removal and installation of a mould in a pressing machine, given that in the time intervals for performing such operations for removing a mould and installing a new mould, the production cycle is interrupted.

The replacement of a mould also requires the replacement of the removal-holder table.

As mentioned above, the removal-holder table is fixed to the pressing table by means of a central tie-rod.

In order for the removal elements to be efficient and so as not to ruin the removal elements by forcing the latter to move in non-coaxial directions with respect to the through holes in which they are arranged to slide, the removal-holder table must be positioned and it must be able to slide in a much more accurate manner; thus, it must be fixed to the pressing table so as to be parallel to the same pressing table.

Currently, such fixing occurs in a complicated and very time-demanding manner given that the tie-rod is firstly screwed to the removal-holder table at a first end thereof, and the mobile part of the mould, i.e. the puncher, is mounted alongside the removal-holder table, on the pressing plane, making the tie-rod pass through the corresponding hole on the same pressing plane; then, there follows the fixing of the tie-rod to the pressing table by making the second end of the tie-rod to pass through a corresponding hole on the pressing table and then such second threaded end is locked to the pressing table using a nut and lock nut.

Then the other columnar elements, referred to in the technical jargon as auxiliary thrusters', are fixed to the pressing table only with an analogous procedure, so that the free end of the auxiliary thrusters abuts against the removal-holder table.

The length of the central tie-rod must always be precisely equal to the length of the auxiliary thrusters, so that the removal-holder table is displaced in a stably correct manner.

Such precise assembly of the tie-rod and auxiliary thrusters requires a lot of time, with ensuing mould shut down costs and use of specialised manpower.

The task of the present invention is to provide a removal unit for moulds, particularly for moulding plastic material, capable of overcoming the aforementioned drawbacks and limits of the prior art.

In particular, an object of the invention is to provide a removal unit that can be installed on a mould with a greater degree of precision with respect to removal systems of the prior art.

Another object of the invention is to provide a removal unit that is simple and quick to install and equally simple and quick to remove.

A further object of the invention is to provide a tie-rod for a similar removal unit that is clearly suitable for attaining the aforementioned task and objects.

The aforementioned task and objects are attained by a removal unit for moulds, particularly for moulding plastic material, according to claim 1, as well as by a thruster according to claim 11.

Further characteristics of the removal unit according to claim 1 are described in the dependent claims.

The aforementioned task and objects, alongside the advantages described hereinafter, are outlined in the description of an embodiment of the invention, provided solely by way of non-limiting example, with reference to the attached drawings wherein:
- figure 1 represents a perspective view of a removal unit according to the invention;
- figure 2 represents a perspective view of a tie-rod of a removal unit according to the invention;
- figure 3 represents a sectional lateral view of a portion of a removal unit according to the invention;
- figure 4 represents a sectional lateral view of a tie-rod according to the invention;
- figure 5 represents a lateral view of a component of a removal unit according to the invention.

With reference to the aforementioned figures, a removal unit according to the invention is indicated in its entirety with number **10.**

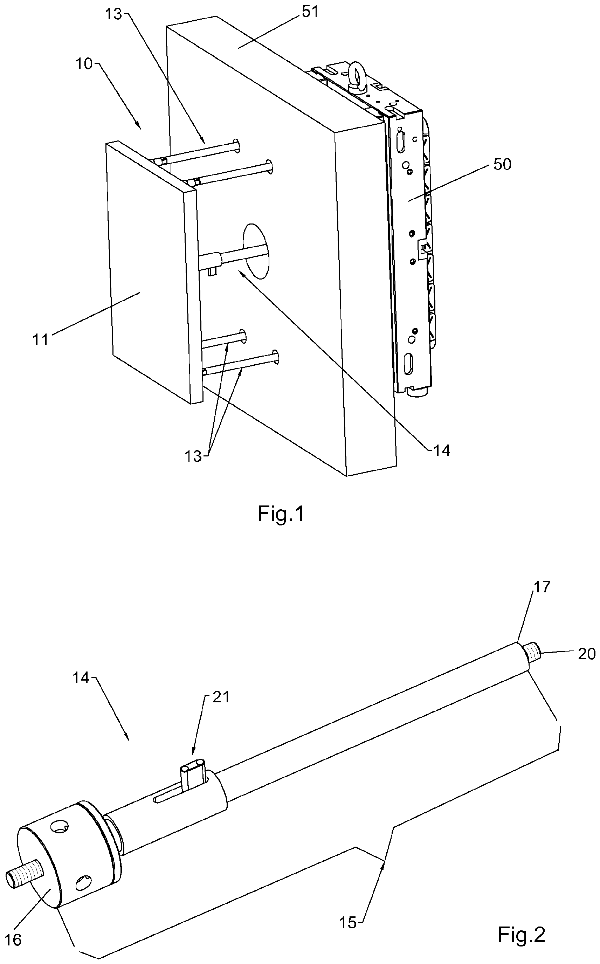

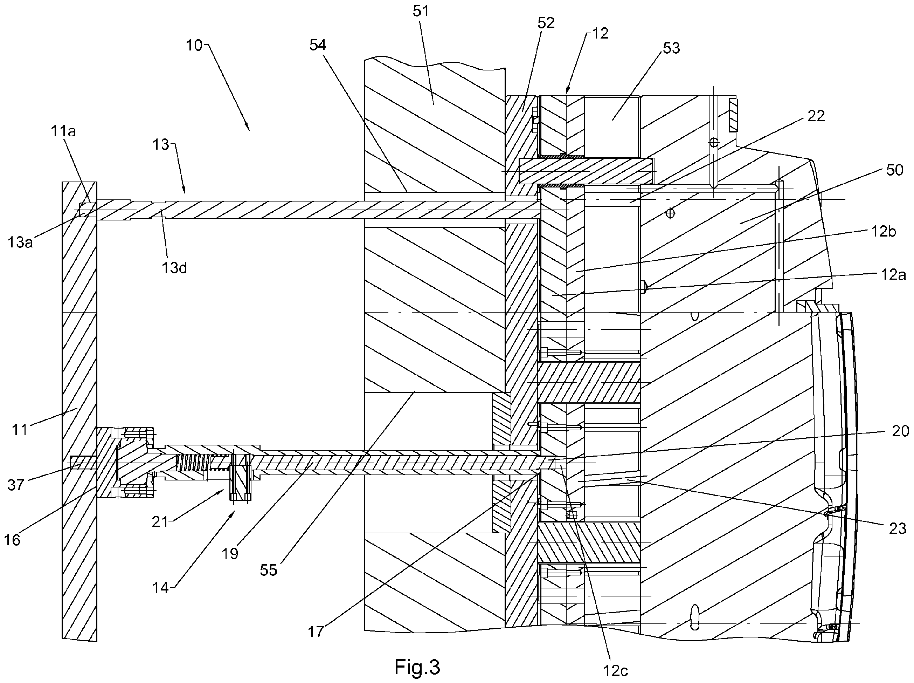

Such removal unit **10** is represented in figures 1 and 3 associated to a punch **50** of a mould, to be deemed of the known type, the punch **50** is to be deemed fixed to a pressing plane **51** of a pressing machine, also of the known type.

The punch **50** comprises a fixing plate **52** for fixing the punch **50** to the pressing plane **51.**

Between the punch **50** and the fixing plate **52** there is defined an interspace **53** in which a removal-holder body **12** is arranged to slide.

The width of such interspace **53** is such to enable the reversible sliding of the removal-holder body **12** suitable to determine the removal of a moulded piece from the punch **50.**

Such removal unit **10** comprises:
- a thrust plate **11,**
- a removal-holder body **12,**
- a plurality of columnar elements **13** suitable to transfer a removal thrust from the thrust plate **11** to the removal-holder body **12,** comprising a fixing tie-rod **14** between the thrust plate **11** and the removal-holder body **12.**

The distinctive trait of the removal unit **10** according to the invention lies in the fact that the tie-rod **14** in turn comprises:
- a fixed-length body **15,** suitable to rest - at one end **16** - against the thrust plate **11** and - at the opposite end **17** - against the removal-holder body **12,**
- a moveable insert **19** with threaded end **20,** arranged in the fixed-length body **15** and suitable to be displaced therein between
- a first fixing configuration, with threaded end **20** projecting from the fixed-length body **15,** in the direction of the main axis **X** of the fixed-length body **15,** and screwed to one from among said thrust plate **11** and said removal-holder body **12,** for example screwed to the removal-holder body **12,**
- and a second assembly or removal configuration, with threaded end **20** inside the fixed-length body **15,**
- means **21** for displacing said moveable insert **19** between said two configurations.

The thrust plate **11** for example consists of a moulding table.

The removal-holder body **12** for example consists of a removal-holder table, in turn comprising two plates **12a** and **12b** closed as a sandwich between which there are interposed and constrained the heads for locking the removal elements, for example **22** and **23** in figure 3, to be deemed of the known type.

In the embodiment of the invention herein described by way of non-limiting example of the invention itself, the fixed-length body **15** of the tie-rod **14** comprises a tubular strut **24,** within which there is housed the moveable insert **19,** a thrust-damping bearing **25** with idle pin **26,** and a casing **27** for containing such bearing **25.**

The tubular strut **24** has an internally threaded end portion **28,** for the screwing of the idle pin **26** having a corresponding threading.

The tubular strut **24** is screwed to the idle pin **26** until the corresponding end **29** ends up in abutment against an opposite shoulder **30** of the bearing **25.**

The screwing of the tubular strut **24** to the idle pin **26** is stabilised by means of a radial grub screw **31.**

The containment casing **27** consists of a sleeve-like body **32** within which there is defined a seat **33** for housing said bearing **25,** and an annular lid **34,** designated to lock the outer jacket of the bearing **25** in the sleeve-like body **32.** The annular lid **34** is fixed to the sleeve-like body **32** for example by means of threaded connections, screws for example.

The radial and axial bearing **25** with idle pin **26** should be deemed to consist of a set of components that are per se known and available in the market.

The containment casing **27** has a resting surface **36** from which there extends a threaded shank **37.**

The length **A1** of the fixed-length body **15** is thus the distance between the resting surface **36** of the containment casing **27** and an opposite resting area **38** defined at the free end **17** of the tubular strut **24.**

The moveable insert **19** with threaded end **20** consists of a bar comprising, starting from the threaded end **20,**
- a sliding portion **40,** inserted to slide in a corresponding counter-shaped tubular-guide section **41** of the tubular strut **24,**
- a manoeuvre portion **42,** from which there extends, exiting from the tubular strut **24,** a gripping element **43** for rotating the moveable insert **19,**
- a centring end **44,** opposite to the threaded end **20,** suitable to determine the correct positioning of an elastic thrust element, for example a helical spring **45.**

The means **21** for displacing the moveable insert **19** comprise the gripping element **43** and the elastic thrust element, i.e. the helical spring **45.**

The gripping element **43** for example consists of a flat-like knob fixed by means of one or more threaded connections **46** to the manoeuvre portion **42.**

The gripping element **43** radially projects from the tubular strut **24** through a slot opening **47** obtained on the tubular strut **24.**

The length in the direction of the main axis **X** of such slot opening **47** is such to enable the gripping element **43** a travel that is greater than the length of the threaded portion of the threaded end **20.**

The width of such slot opening **47** is such to enable the gripping element **43** to pass through during assembly.

The manoeuvre portion **42** has a larger transversal diameter with respect to the sliding portion **40,** so as to define - with the latter - an end-stop shoulder **48** suitable for abutment with a corresponding inner shoulder **49** defined in the tubular strut **24;** the abutment of the end-stop shoulder **48** of the moveable insert **19** against the inner shoulder **49** determines the maximum length of the threaded end portion **20** that can project from the free end **17** of the tubular strut **24.**

The helical spring **45** is interposed to operate thrust-wise between the moveable insert **19** and the idle pin **26.**

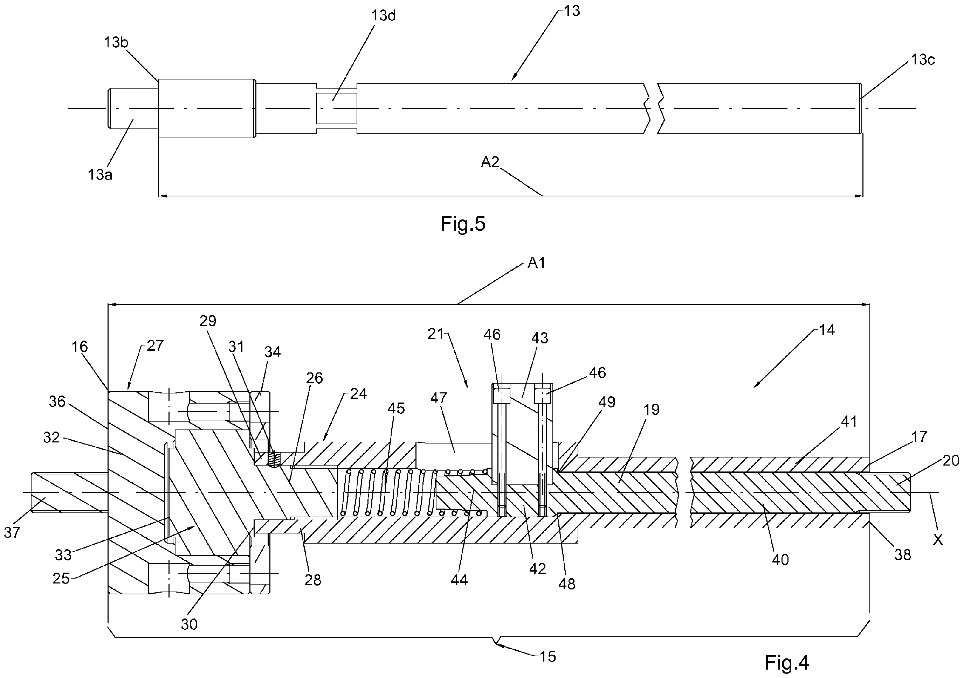

The columnar elements **13,** one of which is represented by way of example in figure 5, each consist of a bar whose length **A2** is equal to the length **A1** of the fixed-length body **15.**

A columnar element **13** comprises
- a threaded shank **13a,**
- a first end flat face **13b** surrounding the threaded shank **13a,**
- an opposite second flat face **13c,**
- a shaped intermediate portion **13d.**

The operations for mounting the removal unit **10** according to the invention are as follows.

A first operation provides for fixing the columnar elements **13** to the thrust plate **11,** by screwing the respective threaded shanks **13a** in corresponding counter-threaded holes **11a,** until the end faces **13b** are pressed against the surface of the thrust plate **11.**

A second operation provides for fixing the tie-rod **14** to the thrust plate **11,** by means of screwing the threaded shank **37** of the containment casing **27** until the resting surface **36** is pressed against the surface of the thrust plate **11.**

The columnar elements **13** are positioned to traverse by corresponding through holes **54** defined on the pressing plane **51.**

The tie-rod **14** is positioned to traverse a corresponding through hole **55** defined on the pressing plane **51.**

In a subsequent operation, the plate **52** with the punch **50** is fixed to the pressing plane **51.**

The removal-holder body **12** is slid until it abuts against the threaded end **20** of the moveable insert **19** of the tie-rod **14,** which is in normally extracted configuration with respect to the tubular strut **24** of the tie-rod **14.**

The moveable insert **19** is pushed towards the inside of the tubular strut, until it is retracted thereinto at least partly.

The gripping element **43** slides, alongside the moveable insert **19** to which it is fixed, into the slot opening **47.**

Operating manually on the gripping element **43** the moveable insert **19** is rotated, which is in turn axially pushed towards the outside of the tubular strut **24** by the helical spring **45.**

The rotation of the gripping element **43,** exiting from the slot opening **47,** determines the simultaneous rotation of the tubular strut **24.**

Such operation determines the screwing of the threaded end **20** to a corresponding counter-threaded hole **12c** present on the removal-holder body **12.**

As such screwing operation is progressively carried out, the removal-holder body **12** approaches the ends of the columnar elements **13** and the gripping element **43** is displaced in its slot opening **47.**

The screwing operation ends when the removal-holder body **12** abuts against the resting area **38** of the free end **17** of the tubular strut **24.**

Given that the length **A1** of the fixed-length body **15** of the tie-rod **14** is equal to the length **A2** of the columnar elements **13,** when the removal-holder body **12** abuts against the resting area **38** of the free end **17** of the tubular strut **24,** the removal-holder body **12** simultaneously rests against all the flat faces **13c** of the columnar elements **13.**

This enables eliminating all the demanding operations for fixing and adjusting the length of the single columnar elements typical of the removal systems of the known type, and the removal-holder body **12,** i.e. the removal-holder table, is immediately positioned in a correct and precise manner according to a laying plane parallel to that of the thrust plate **11.**

In order to remove the punch from the pressing plane **51,** for example when replacing the mould, one proceeds in the inverse order, unscrewing the moveable insert **19** from the removal-holder body **12.**

As described above, the length of the slot opening **47** is such to enable the gripping element **43** a longer travel with respect to the length of the threaded portion of the threaded end **20** of the moveable insert **19;** this enables an operator to check the complete separation of the threaded end from the threaded hole **12c** of the removal-holder body **12,** by simply moving the gripping element **43** in the slot opening **47** moving away from the removal-holder body **12.**

If such move-away movement is hindered, it means that the threaded end **20** is still held in the hole **12c** with one or more threads.

Such check is crucial for the wholeness of the pressing machine, mould and removal unit **10,** given that the displacement of the punch **50** with the tie-rod **14** still constrained thereto could cause considerable damage.

A tie-rod **14** for such removal unit **10** forms an object of the invention too. Such tie-rod **14** comprises:
- a fixed-length body **15,**
- a moveable insert **19** with threaded end **20,** arranged inside said fixed-length body **15** and suitable to be displaced - therein - between a first fixing configuration, with threaded end **20** projecting from said fixed-length body **15,** in the direction of the main axis **X** of the fixed-length body **15,** and a second assembly or removal configuration with threaded end **20** inside said fixed-length body **15,**
- means **21** for displacing said moveable insert **19** between said two configurations.

Such tie-rod **14,** fixed-length body **15,** moveable insert **19** and means **21** for displacing the latter shall be deemed as described above.

Basically, it has been observed that the invention attains the pre-set task and objects.

In particular, the invention enabled providing a removal unit **10** that can be installed on a mould with a greater level of precision with respect to removal systems of the prior art; this enables obtaining a precise and stable positioning and displacement of the removal-holder body, so as to avoid any malfunctioning and damaging of the removers and the punch, as well as the finished piece when removing from the punch.

Furthermore, the invention enabled providing a removal unit that is simple and quick to install and equally simple and quick to remove.

Furthermore, the invention enabled providing a tie-rod for a similar removal unit that is easy and quick to install and remove.

## Claims

1. Removal unit (10) for moulds, particularly for moulding plastic material, comprising:
- a removal-holder body (12),
- at least one tie-rod (14) comprising:
- a fixed-length body (15), suitable to rest - at one end (17) - against said removal-holder body (12),
- a moveable insert (19) with threaded end (20), arranged inside said fixed-length body (15) and suitable to be displaced - therein - between a first fixing configuration, with threaded end (20) projecting from said fixed-length body (15), in the direction of the main axis (X) of the fixed-length body (15), and a second assembly or removal configuration with threaded end (20) inside said fixed-length body (15),
- means (21) for displacing said moveable insert (19) between said two configurations,
said removal unit (10) being **characterized in that** it comprises
- a thrust plate (11),
- a plurality of columnar elements (13) suitable to transfer a removal thrust from said thrust plate (11) to said removal-holder body (12), comprising at least one fixing tie-rod (14) between said thrust plate (11) and said removal-holder body (12),
said fixed-length body (15) being suitable to rest - at one end (16) - against said thrust plate (11), said moveable insert (19) with threaded end (20), in said first fixing configuration, with threaded end (20) projecting from said fixed-length body (15), being screwed to one from among said thrust plate (11) and said removal-holder body (12).

2. Removal unit according to claim 1, **characterised in that** said removal-holder body (12) consists of a removal-holder table, in turn comprising two plates (12a, 12b) closed as a sandwich, between which the removal locking heads (22, 23) are interposed and constrained.

3. Removal unit according to one or more of the preceding claims, **characterised in that** said fixed-length body (15) of the tie-rod (14) comprises a tubular strut (24), within which said moveable insert (19) is housed, a thrust-damping bearing (25) with idle pin (26), and a casing (27) for containing such bearing (25).

4. Removal unit according to one or more of the preceding claims, **characterised in that** said tubular strut (24) has an internally threaded end portion (28), for screwing the idle pin (26) having a corresponding thread, said tubular strut (24) being screwed to the idle pin (26) until the corresponding end (29) abuts against an opposite shoulder (30) of the bearing (25).

5. Removal unit according to one or more of the preceding claims, **characterised in that** said containment casing (27) has a resting surface (36) from which a threaded shank (37) extends.

6. Removal unit according to one or more of the preceding claims, **characterised in that** the length (A1) of the fixed-length body (15) is the distance between the resting surface (36) of the containment casing (27) and an opposite resting area (38) defined at the free end (17) of the tubular strut (24).

7. Removal unit according to one or more of the preceding claims, **characterised in that** said moveable insert (19) with threaded end (20) consists of a bar comprising, starting from the threaded end (20),
- a sliding portion (40), inserted to slide in a corresponding counter-shaped tubular-guide section (41) of the tubular strut (24),
- a manoeuvre portion (42), from which there extends, exiting from the tubular strut (24), a gripping element (43) for rotating the moveable insert (19),
- a centring end (44), opposite to the threaded end (20), suitable to determine the correct positioning of an elastic thrust element, for example a helical spring (45).

8. Removal unit according to one or more of the preceding claims, **characterised in that** said means (21) for displacing the moveable insert (19) comprise the gripping element (43) and the elastic thrust element, i.e. the helical spring (45).

9. Removal unit according to one or more of the preceding claims, **characterised in that** said gripping element (43) radially projects from the tubular strut (24) through a slot opening (47) obtained on the tubular strut (24).

10. Removal unit according to one or more of the preceding claims, **characterised in that** said columnar elements (13) each consist of a bar whose length (A2) is equal to the length (A1) of the fixed-length body (15).

## Patentansprüche

1. Auswerfereinheit (10) für Formwerkzeuge, insbesondere für das Formen von Kunststoffmaterial, Folgendes umfassend:
- einen Auswerfer-Tragkörper (12),
- wenigstens eine Zugstange (14), Folgendes umfassend:
- einen Körper von fester Länge (15), dazu geeignet an einem Ende (17) an dem besagten Auswerfer-Tragkörper (12) anzuliegen,
- einen beweglichen Einsatz (19) mit Gewindeende (20), innerhalb des besagten Körpers von fester Länge (15) angeordnet und dazu geeignet, darin zwischen einer ersten Befestigungskonfiguration, in der das Gewindeende (20) aus dem Körper von fester Länge (15) in Richtung der Hauptachse (X) des Körpers von fester Länge (15) herausragt, und einer zweiten Anordnungs- oder Trennungskonfiguration, in der das Gewindeende (20) sich innerhalb des besagten Körpers von fester Länge (15) befindet, verschoben zu werden,
- Mittel (21) zur Verschiebung des besagten beweglichen Einsatzes (19) zwischen den besagten zwei Konfigurationen,
wobei die besagte Auswerfereinheit (10) **dadurch gekennzeichnet ist, dass** sie Folgendes umfasst
- eine Druckplatte (11),
- eine Vielzahl säulenförmiger Elemente (13), dazu geeignet, einen Auswurfschub von der besagten Druckplatte (11) an den besagten Auswerfer-Tragkörper (12) zu übertragen, wenigstens eine Befestigungs-Zugstange (14) zwischen der besagten Druckplatte (11) und dem besagten Auswerfer-Tragkörper (12) umfassend,
wobei der besagte Körper von fester Länge (15) dazu geeignet ist an einem Ende (16) an der besagten Druckplatte (11) anzuliegen, wobei der besagte bewegliche Einsatz (19) mit Gewindeende (20), in der besagten ersten Befestigungskonfiguration mit aus dem besagten Körper von fester Länge (15) herausragendem Gewindeende (20), entweder an der besagten Druckplatte (11) oder an dem besagten Auswerfer-Tragkörper (12) verschraubt ist.

2. Auswerfereinheit nach Patentanspruch 1, **dadurch gekennzeichnet, dass** der besagte Auswerfer-Tragkörper (12) aus einem Auswerfer-Tragtisch besteht, der seinerseits zwei Platten (12a, 12b) umfasst, die sandwichförmig geschlossen sind und zwischen denen die Auswerfer-Spannköpfe (22, 23) eingefügt und eingezwängt sind.

3. Auswerfereinheit nach einem oder mehreren der vorstehenden Patentansprüche, **dadurch gekennzeichnet, dass** der besagte Körper von fester Länge (15) der Zugstange (14) eine röhrenförmige Strebe (24), in welcher der besagte bewegliche Einsatz (19) aufgenommen ist, ein Drucklager (25) mit Freilaufbolzen (26) und ein Gehäuse (27) zur Aufnahme dieses Lagers (25) umfasst.

4. Auswerfereinheit nach einem oder mehreren der vorstehenden Patentansprüche, **dadurch gekennzeichnet, dass** die besagte röhrenförmige Strebe (24) einen Endabschnitt (28) mit Innengewinde aufweist, um den Freilaufbolzen (26) mit entsprechendem Gewinde anzuschrauben, wobei die besagte röhrenförmige Strebe (24) an den Freilaufbolzen (26) angeschraubt wird, bis das entsprechende Ende (29) gegen eine entgegengesetzte Schulter (30) des Lagers (25) stößt.

5. Auswerfereinheit nach einem oder mehreren der vorstehenden Patentansprüche, **dadurch gekennzeichnet, dass** das besagte Aufnahmegehäuse (27) eine aufliegende Fläche (36) aufweist, von der sich ein Gewindeschaft (37) erstreckt.

6. Auswerfereinheit nach einem oder mehreren der vorstehenden Patentansprüche, **dadurch gekennzeichnet, dass** die Länge (A1) des Körpers von fester Länge (15) der Abstand zwischen der aufliegenden Fläche (36) des Aufnahmegehäuses (27) und einem entgegengesetzten aufliegenden Bereich (38) ist, der an dem freien Ende (17) der röhrenförmigen Strebe (24) definiert ist.

7. Auswerfereinheit nach einem oder mehreren der vorstehenden Patentansprüche, **dadurch gekennzeichnet, dass** der besagte bewegliche Einsatz (19) mit Gewindeende (20) aus einer Stange besteht, die, an dem Gewindeende (20) beginnend, Folgendes umfasst
- einen gleitenden Abschnitt (40), der eingesetzt ist, um in einem entsprechenden, gegengeformten röhrenförmigen Führungsabschnitt (41) der röhrenförmigen Strebe (24) zu gleiten,
- einen Manövrierabschnitt (42), von dem sich ausgehend von der röhrenförmigen Strebe (24) ein Greifelement (43) erstreckt, um den beweglichen Einsatz (19) zu drehen,
- ein dem Gewindeende (20) entgegengesetztes Zentrierende (44), dazu geeignet, die korrekte Positionierung eines elastischen Schubelements, beispielsweise eine Schraubenfeder (45), zu bestimmen.

8. Auswerfereinheit nach einem oder mehreren der vorstehenden Patentansprüche, **dadurch gekennzeichnet, dass** die besagten Mittel (21) zur Verschiebung des beweglichen Einsatzes (19) das Greifelement (43) und das elastische Schubelement, d.h. die Schraubenfeder (45), umfassen.

9. Auswerfereinheit nach einem oder mehreren der vorstehenden Patentansprüche, **dadurch gekennzeichnet, dass** das besagte Greifelement (43) radial durch eine Schlitzöffnung (47) in der röhrenförmigen Strebe (24) aus der röhrenförmigen Strebe (24) herausragt.

10. Auswerfereinheit nach einem oder mehreren der vorstehenden Patentansprüche, **dadurch gekennzeichnet, dass** die besagten säulenförmigen Elemente (13) jeweils aus einer Stange bestehen, deren Länge (A2) gleich der Länge (A1) des Körpers von fester Länge (15) ist.

## Revendications

1. Groupe extracteur (10) pour moules, particulièrement pour le moulage de matériaux plastiques, comprenant:
- un corps porte-extracteurs (12),
- au moins un tirant (14) comprenant:
- un corps de longueur fixe (15), apte à s'appuyer - sur une extrémité (17) - contre ledit corps porte-extracteurs (12),
- une insertion mobile (19) avec extrémité filetée (20), disposée à l'intérieur dudit corps de longueur fixe (15) et apte à être déplacée - dans celui-ci - entre une première configuration de fixation, avec extrémité filetée (20) saillant dudit corps de longueur fixe (15), dans la direction de l'axe principal (X) du corps de longueur fixe (15), et un deuxième groupe ou configuration d'extraction avec extrémité filetée (20) à l'intérieur dudit corps de longueur fixe (15),
- des moyens (21) pour le déplacement de ladite insertion mobile (19) entre lesdites deux configurations,
ledit groupe extracteur (10) étant **caractérisé en ce qu'**il comprend
- une plaque de poussée (11),
- une pluralité d'éléments en forme de colonne (13) aptes à transférer une poussée d'extraction de ladite plaque de poussée (11) audit corps porte-extracteurs (12), comprenant au moins un tirant de fixation (14) entre ladite plaque de poussée (11) et ledit corps porte-extracteurs (12),
ledit corps de longueur fixe (15) étant apte à s'appuyer - sur une extrémité (16) - contre ladite plaque de poussée (11), ladite insertion mobile (19) avec extrémité filetée (20), dans ladite première configuration de fixation, avec extrémité filetée (20) saillant dudit corps de longueur fixe (15), étant vissée sur un entre ladite plaque de poussée (11) et ledit corps porte-extracteurs (12).

2. Groupe extracteur selon la revendication 1, **caractérisé en ce que** ledit corps porte-extracteurs (12) est constitué d'une table porte-extracteurs, comprenant à son tour deux plaques (12a, 12b) fermées en sandwich entre lesquelles les têtes de blocage d'extracteurs (22, 23) sont interposées et bloquées.

3. Groupe extracteur selon une ou plusieurs des revendications précédentes, **caractérisé en ce que** ledit corps de longueur fixe (15) du tirant (14) comprend un étrésillon tubulaire (24), à l'intérieur duquel est logée ladite insertion mobile (19), un palier de butée (25) avec axe inactif (26), et un boîtier (27) pour le confinement dudit palier (25).

4. Groupe extracteur selon l'une ou plusieurs des revendications précédentes, **caractérisé en ce que** ledit étrésillon tubulaire (24) présente une portion d'extrémité intérieurement filetée (28), pour visser l'axe inactif (26) présentant un filetage correspondant, ledit étrésillon tubulaire (24) étant vissée sur l'axe inactif (26) jusqu'à ce que l'extrémité correspondante (29) va s'appuyer contre un épaulement opposé (30) du palier (25).

5. Groupe extracteur selon l'une ou plusieurs des revendications précédentes, **caractérisé en ce que** ledit boîtier de confinement (27) présente une surface d'appui (36) de laquelle s'étend une tige filetée (37).

6. Groupe extracteur selon l'une ou plusieurs des revendications précédentes, **caractérisé en ce que** la longueur (A1) du corps de longueur fixe (15) est la distance entre la surface d'appui (36) du boîtier de confinement (27) et une zone d'appui opposée (38) définie à l'extrémité libre (17) de l'étrésillon tubulaire (24).

7. Groupe extracteur selon l'une ou plusieurs des revendications précédentes, **caractérisé en ce que** ladite insertion mobile (19) avec extrémité filetée (20) est constituée d'une barre comprenant, à partir de l'extrémité filetée (20),
- une portion de coulissement (40), insérée pour coulisser dans une section de guidage tubulaire contre-galbée correspondante (41) de l'étrésillon tubulaire (24),
- une portion de manoeuvre (42), de laquelle se développe, sortant de l'étrésillon tubulaire (24), un élément de préhension (43) pour la rotation de l'insertion mobile (19),
- une extrémité de centrage (44), opposée à l'extrémité filetée (20), apte à déterminer le positionnement correct d'un élément de poussée élastique, par exemple un ressort hélicoïdal (45).

8. Groupe extracteur selon l'une ou plusieurs des revendications précédentes, **caractérisé en ce que** lesdits moyens (21) pour le déplacement de l'insertion mobile (19) comprennent l'élément de préhension (43) et l'élément de poussée élastique, c'est-à-dire le ressort hélicoïdal (45).

9. Groupe extracteur selon l'une ou plusieurs des revendications précédentes, **caractérisé en ce que** ledit élément de préhension (43) saillit radialement de l'étrésillon tubulaire (24) à travers une ouverture à fente (47) réalisée sur l'étrésillon tubulaire (24).

10. Groupe extracteur selon l'une ou plusieurs des revendications précédentes, **caractérisé en ce que** chacun desdits éléments en forme de colonne (13) est constitué d'une barre ayant une longueur (A2) égale à la longueur (A1) du corps de longueur fixe (15).
